(19) Europäisches Patentamt
European Patent Office
Office européen des brevets

(11) **EP 1 436 675 B1**

(12) **EUROPÄISCHE PATENTSCHRIFT**

(45) Veröffentlichungstag und Bekanntmachung des Hinweises auf die Patenterteilung:
**23.01.2008  Patentblatt 2008/04**

(21) Anmeldenummer: **02772216.4**

(22) Anmeldetag: **28.08.2002**

(51) Int Cl.:
***G05B 19/418*** (2006.01)

(86) Internationale Anmeldenummer:
**PCT/EP2002/009581**

(87) Internationale Veröffentlichungsnummer:
**WO 2003/034164 (24.04.2003 Gazette 2003/17)**

(54) **VERFAHREN UND ANORDNUNG ZUR BESTIMMUNG UND/ODER FERTIGUNG EINES ANTRIEBS ODER TEILEN FÜR EINEN ANTRIEB, SOWIE SCHNITTSTELLE UND VERFAHREN ZUR BESTIMMUNG EINES BETRIEBSSICHERHEITSFAKTORS SB**

METHOD AND ASSEMBLY FOR DETERMINING AND/OR PRODUCING A DRIVE OR PARTS FOR A DRIVE AND INTERFACE AND METHOD FOR DETERMINING AN OPERATIONAL RELIABILITY FACTOR SB

PROCEDE ET DISPOSITIF DE DETERMINATION ET/OU DE PRODUCTION D'UN SYSTEME D'ENTRAINEMENT OU DE PIECES CONNUES POUR UN SYSTEME D'ENTRAINEMENT, ET INTERFACE ET PROCEDE DE DETERMINATION D'UN FACTEUR DE SECURITE DE FONCTIONNEMENT SB

(84) Benannte Vertragsstaaten:
**AT BE BG CH CY CZ DE DK EE ES FI FR GB GR IE IT LI LU MC NL PT SE SK TR**

(30) Priorität: **11.10.2001   DE 10150034**
**19.11.2001   DE 10156330**

(43) Veröffentlichungstag der Anmeldung:
**14.07.2004   Patentblatt 2004/29**

(73) Patentinhaber: **Sew-Eurodrive GmbH & Co. KG**
**76646 Bruchsal (DE)**

(72) Erfinder:
• **BARTON, Peter**
**75015 Bretten (DE)**
• **SCHÄFER, Roman**
**76646 Bruchsal (DE)**

(56) Entgegenhaltungen:
**EP-A- 1 134 637**

## Beschreibung

Die Erfindung betrifft ein Verfahren zur Bestimmung und/oder Fertigung eines Antriebs oder Teilen für einen Antrieb und einen Datenträger.

Hersteller von Antrieben, umfassend Umrichter, Elektromotoren und Getriebe, bieten dem Kunden üblicherweise eine umfangreiche Baureihe von Antrieben an, aus denen der Kunde gemäß seinen Anforderungen für seine spezielle Applikation den bestmöglichsten Antrieb heraussuchen kann. Beim Heraussuchen sind die Applikationsdaten, umfassend Betriebsarten, Betriebsbelastungen und Bauformen wesentlich. Die Zahl anbietbarer Varianten unter Berücksichtigung aller Baugrößen solcher Baureihen ist sehr umfangreich, insbesondere mehr als 10 000 oder 100 000.

Aus der EP 1 134 637 A2 ist ein Verfahren zum Konstruieren und Fertigstellen und zur Qualitätsüberprüfungs eines Werkstücks bekannt

Der Erfindung liegt die Aufgabe zugrunde, eine genauere, einfachere und optimale Auswahl des für die jeweilige Applikation geeignetsten Antriebes, insbesondere des Getriebes, zu ermöglichen.

Erfindungsgemäß wird die Aufgabe bei Verfahren nach den in Anspruch 1 und bei dem Datenträger nach den in Anspruch 27 angegebenen Merkmalen gelöst.

Wichtige Merkmale bei dem Verfahren zur Bestimmung und/oder Fertigung eines Antriebs oder Teilen für einen Antrieb sind, dass der Antrieb von einer Baureihe umfasst ist, die mindestens eine Baugröße umfasst, wobei jede Baugröße mindestens eine Variante von Antrieben umfasst,
aus eingegebenen und/oder übermittelten Applikationsdaten und/oder Daten eines eingegebenen und/oder übermittelten Lastkollektivs, insbesondere eines mehrere Teilkollektive umfassenden Lastkollektivs, für jede Variante der Baureihe ein Wert einer Größe zur quantitativen Erfassung der Überlastfähigkeit bestimmt wird,
und nur Varianten bestimmt und/oder gefertigt werden, deren Wert der quantitativen Größe eine Bedingung erfüllt, insbesondere einen kritischen Wert überschreitet oder extremal ist. Von Vorteil ist dabei, dass die heutige Auslegungsunschärfe bei Getriebemotoren vor allem in Grenzbereichen der Standardanwendungen und in der Servotechnik unter Beachtung der Überlastfähigkeit von Getriebeelementen im Zeitfestigkeitsbereich deutlich verringerbar ist.

Bei einer bevorzugten Ausführung ist die quantitative Größe ein Betriebssicherheitsfaktors $S_B$ und es werden nur Varianten bestimmt und/oder gefertigt, deren Betriebssicherheitsfaktor $S_B$ als Bedingung den Wert 1 überschreitet. Von Vorteil ist dabei, dass eine Größe verwendet wird, die ein quantitatives Maß für die Überlastfähigkeit darstellt und somit mit objektiven Kriterien die Bestimmung und Fertigung eines für die Applikation bestgeeignetsten Antriebs zulässt Insbesondere ist sogar eine maximal zulässige Sicherheit auch vorgebbar, wobei somit Überdimensionierungen vermeidbar sind, Alternativ ist auch eine noch höhere Sicherheit als nur die ausreichende Sicherheit vorgebbar. Beispielsweise ist sogar der sicherste Antrieb aus der gesamten Baureihe auswählbar.

Bei einer bevorzugten Ausführung wird nur diejenige Variante bestimmt und/oder gefertigt, die für die Applikation, insbesondere gemäß weiterer Anforderungen, der optimale und/oder kostengünstigste Antrieb ist, falls für mehr als einen Antrieb der Betriebssicherheitsfaktors $S_B$ größer ist als 1 Von Vorteil ist dabei, dass das Kriterium Sicherheit mit anderen Kriterien, wie Kosten oder Bauform, Baugröße, geometrische Abmessungen oder dergleichen, anwendbar und verknüpfbar ist..

Wichtige Merkmale der Erfindung bei dem Verfahren zur Bestimmung eines Betriebssicherheitsfaktors $S_B$ bei einem für eine Last vorgesehenen Antrieb, umfassend Getriebe und Motor, dass aus einem mindestens dreidimensionalen Lastkollektiv ein Betriebssicherheitsfaktors $S_B$ für den Antrieb oder zumindest für dessen Getriebe bestimmt wird.

Von Vorteil ist dabei, dass die heutige Auslegungsunschärfe bei Getriebemotoren vor allem in Grenzbereichen der Standardanwendungen und in der Servotechnik unter Beachtung der Überlastfähigkeit von Getriebeelementen im Zeitfestigkeitsbereich deutlich verringerbar ist. Zu diesem Zweck werden vierdimensionale Lastkollektive berücksichtigbar, mit deren Hilfe man u.a. auch zu einer genauen Kenntnis der Belastung aus der Anfahrdynamik gelangt.. Ein wichtiger vorteilhafter Verfahrenscharakter ist die komponentenindividuelle Festigkeitsbetrachtung anstatt einer generellen Darstellung des Getriebemotors als "black box". Ein bedeutender Vorteil ist weiterhin, dass die Belastbarkeit der querkraftbeanspruchten Abtriebswellenkomponenten teilkollektivabhängig und somit belastungsabhängig ist. Außerdem sind nicht nur Querkraft, insbesondere deren Betrag und Richtung, sondern auch die Axialkraft berücksichtigbar. Darüber hinaus benötigt das Verfahren nur eine geringe Rechenzeit und ist für den Bediener einfach gestaltbar. Wesentlicher Vorteil ist außerdem, dass eine quantitative Größe, nämlich der Betriebssicherheitsfaktors $S_B$ bestimmt wird und somit ausgehend von der Applikation bzw. den Applikationsdaten eine quantitative Bewertung eines jeden Antriebs der gesamten Baureihe verwendbar ist Bei geänderten Applikationsdaten ändert sich auch dieser quantitative Wert. Somit ist für jede Applikation individuell der optimale Antrieb bestimmbar.

Bei einer vorteilhaften Ausgestaltung wird zumindest beim Getriebe für jede Komponente j ein Einzelbetriebssicherheitsfaktors $S_{Bj}$ bestimmt und daraus das Minimum aller Einzelbetriebssicherheitsfaktoren $S_{Bj}$ als Betriebssicherheitsfaktor $S_B$, verwendet oder bestimmt und ausgegeben und/oder angezeigt zur weiteren Verwendung bei Auftragsauslösung oder Fertigung. Von Vorteil ist dabei, dass für jede Komponente ein quantitativer Wert bestimmbar ist und aus all diesen Werten ein Gesamtwert quantitativ bestimmbar ist, der die Betriebssicherheit des Antriebs quantifiziert..

Bei einer vorteilhaften Ausgestaltung ist das Lastkollektiv mindestens vierdimensional und umfasst mindestens Informationen über den zeitlichen Verlauf der Größen Drehmoment, Drehzahl, Axialkraft und Querkraft Insbesondere sind bei der Eingabe der Querkraft Richtung und Betrag oder alternativ zwei entsprechende Komponenten ausführbar Bei weiter bevorzugter Ausführung ist sogar der Angriffspunkt der Querkraft eingebbar.. Von Vorteil ist dabei, dass nicht nur stationäre Belastungen mit konstanten Werten eingebbar sind sondern auch zeitliche Verläufe der realen Applikation. Außerdem wird nicht irgendein fiktiver maximaler Wert für die Größen, insbesondere für das Lastkollektiv, verwendet, sondern die im jeweiligen Teilkollektiv des Lastkollektives auftretenden wirklichen Werte der Größen.. Weiter wird sogar die Richtung und der Betrag der Querkraft und/oder sogar der Angriffspunkt der Querkraft am jeweiligen Wellenabschnitt berücksichtigbar. Somit ist eine genaue Bestimmung des Betriebssicherheitsfaktors ermöglicht, sogar abhängig von der Querkraftrichtung und dem Angriffspunkt derselben. Gerade dadurch, dass für jedes Teilkollektiv ein eigener Wert berücksichtigbar ist, ist der zu fertigende Antrieb viel genauer bestimmbar. Somit sind insbesondere kleinere und/oder kostengünstigere Antriebe bestimmbar, fertigbar und verwendbar. Außerdem ist die Sicherheit deutlich erhöhbar.

Bei einer bevorzugten Ausgestaltung ist insbesondere auch ein Eingeben des Vorzeichens der Axialkraft, also eine Unterscheidung in Zug- und Druckkraft, und beim Eingeben des Drehmoments eine Eingabe der Leistungsflussrichtung ermöglicht.. Somit ist die reale Applikation genau beschreibbar, insbesondere ist bei generatorischem und motorischem Betrieb eine Unterscheidung und entsprechend korrekte Auslegung ermöglicht. Insbesondere ist auch die Drehzahlrichtung, welche unterschiedliche Beanspruchungszustände hervorruft, ebenfalls eingebbar und berücksichtigbar. Weiter sind auch Vorschläge von Varianten ausgebbar, die höhere Betriebssicherheit aufweisen.

Bei einer vorteilhaften Ausgestaltung umfasst das Lastkollektiv als Informationen über den zeitlichen Verlauf Lastwechselzahlen für die Größen.. Von Vorteil ist dabei, dass wenige charakteristische Zahlen eingebbar und verwendbar sind..

Bei einer vorteilhaften Ausgestaltung umfasst das Lastkollektiv Teilkollektive, die durch Klassenbildung erzeugt, wobei die jeweiligen Klassen jeweilige Wertebereiche zugehöriger Größen umfassen. Von Vorteil ist dabei, dass die Menge der zu zeitlichen Verläufen gehörigen Daten reduzierbar ist..

Bei einer vorteilhaften Ausgestaltung wird für ein jeweiliges Teilkollektiv für jede Komponente eine Grenzbelastungskennlinie bestimmt und mittels dieser Grenzbelastungskennlinie und mindestens einer vorgebbaren Größe, wie Querkraft und/oder Axialkraft, ein zulässiges äquivalentes Drehmoment bestimmt.. Von Vorteil ist dabei, dass real auftretende Größen durch einen fiktiven Wert für zulässiges äquivalentes Drehmoment ersetzbar sind und diese Drehmomente zusammen mit dem real auftretenden Drehmoment verarbeitbar sind zur Bestimmung des Betriebssicherheitsfaktors $S_B$.

Bei einer vorteilhaften Ausgestaltung werden verschiedene Durchmesser aufweisende Abschnitte von Wellen und/oder Abschnitte von Wellen, die verschiedene Geometrieunstetigkeiten aufweisen, als separate Komponenten berücksichtigt. Von Vorteil ist dabei, dass komplexe geometrische Ausprägungen in einfacher Weise berücksichtigbar sind.

Bei einer vorteilhaften Ausgestaltung ist die Grenzbelastungskennlinie durch zwei Parameter parametrisierbar in einem Querkraft-Drehmoment-Diagramm und/oder die Grenzbelastungskennlinie durch vier oder fünf Parameter parametrisierbar in einem Querkraft-Axialkraft-Diagramm, Von Vorteil ist dabei, dass wenige Parameter ausreichen, um in genügender Genauigkeit die Grenzbelastungskennlinie zu beschreiben, Somit wird die Rechenzeit erheblich reduzierbar. Insbesondere sind sogar geschlossene Lösungen für das Schneiden von Kurven angebbar, was die Rechenzeit um Größenordnungen reduziert und das Verfahren weiter vereinfacht.

Bei einer vorteilhaften Ausgestaltung wird mittels einer Grenzbelastungskennlinie in einem Querkraft-Drehmoment-Diagramm aus einem Wert für Querkraft ein Wert für zulässiges äquivalentes Drehmoment bestimmt. Analog wird bei der Axialkraft vorgegangen.. Bei einer vorteilhaften Ausgestaltung wird mittels einer Grenzbelastungskennlinie in einem Axialkraft-Querkraft-Diagramm aus einem Wert für Axialkraft und einem Wert für Querkraft ein Wert für zulässiges äquivalentes Drehmoment bestimmt. Von Vorteil ist dabei, dass sogar zwei auftretende reale Größen durch eine fiktive Größe beschreibbar sind und zur Bestimmung des Betriebssicherheitsfaktors $S_B$ verwendbar sind..

Bei einer vorteilhaften Ausgestaltung wird für jedes Teilkollektiv und für jede Komponente aus der zugehörigen vorgegebenen Lastwechselzahl, dem Wert für Drehmoment und dem jeweiligen zulässigen äquivalenten Drehmoment eine Bruchlastspielzahl bestimmt. Von Vorteil ist dabei, dass jede Komponente mit der durch Klassenwerte repräsentierten realen Belastung berücksichtigt wird und die Rechenzeit trotzdem klein ist.

Bei einer vorteilhaften Ausgestaltung wird aus den jeweiligen Bruchlastspielzahlen und der zugehörigen Lastwechselzahl ein Einzelbetriebssicherheitsfaktor $S_{Bj} = \dfrac{1}{\sum\limits_i \dfrac{n_i}{N_i}}$ ermittelt.

Bei einer vorteilhaften Ausgestaltung werden die Temperatur der Umgebung, die maximale Betriebstemperatur und/oder die gewünschte Mindest-Lebensdauer des Antriebs von den eingegebenen Applikationsdaten umfasst.. Von Vorteil ist dabei, dass der Einfluss der Temperatur der Umgebung berücksichtigbar ist, weil die Umgebungstemperatur Auswirkung auf die Tragfähigkeit von verschiedenen Getriebeelementen hat. Insbesondere ist auch die maximale Betriebstemperatur eingebbar, wodurch ein Antrieb mit genügend kleinem Wärmeübergangswiderstand vom Inneren des Antriebs oder Getriebeinneren zur Umgebung hin bestimmbar oder fertigbar ist.

Bei einer vorteilhaften Ausgestaltung wird die thermische Getriebebelastbarkeit, insbesondere als thermische Grenzleistung, ausgegeben und/oder angezeigt. Von Vorteil ist dabei, dass die thermische Grenzleistung mit der von der Applikation benötigten Leistung vergleichbar ist und demgemäß entsprechende Antriebe bestimmbar und/oder fertigbar sind.

Wichtige Merkmale bei der Schnittstelle zur Eingabe und Ausgabe von Daten bei dem erfindungsgemäßen Verfahren sind, dass die Schnittstelle eine grafische Benutzerschnittstelle und/oder eine Datenschnittstelle zum Ein- und Ausgeben von Daten umfasst, wobei Lastwechselzahlen oder Fahrdiagramme eingebbar sind, Somit ist auch eine beliebige Mensch-Maschine-Schnittstelle mit Mitteln zur grafischen Anzeige verwendbar, beispielsweise ein Rechner mit Bildschirm, Tastatur und Maus. Da die Applikationsdaten umfangreiche Datenmengen umfassen, insbesondere die zeitlichen Verläufe, sind die Applikationsdaten mittels der grafischen Eingabemöglichkeit schnell und einfach mit geringer Fehleranfälligkeit eingebbar.

Bei einer vorteilhaften Ausgestaltung sind Fahrdiagramme grafisch eingebbar, insbesondere unter Verwendung einer Maus.. Von Vorteil ist dabei, dass durch Ziehen mit der Maus Kurven eingebbar sind, die umfangreiche Datenmengen beinhalten und somit trotzdem nur ein geringer Zeitaufwand zur Dateneingabe erforderlich ist.

Bei einer vorteilhaften Ausgestaltung wird der Benutzer bei der Eingabe derart geführt, dass er nach Eingabe einer Information über Nicht-Vorhandensein einer Axialkraft und/oder Querkraft nur Drehmoment und Lastwechselzahl einzugeben veranlasst wird und dass er nach Eingabe einer Information über Vorhandensein einer Axialkraft und/oder Querkraft Informationen über Größen Axialkraft, Querkraft, Drehmoment und Lastwechselzahl einzugeben veranlasst wird, insbesondere Informationen über den zeitlichen Verlauf aller Größen. Von Vorteil ist dabei, dass je nach Kundenwunsch und Applikation oder auch Wissen des Kunden Ober seine Applikation die Schnittstelle für das Verfahren verwendbar ist..

Bei einer vorteilhaften Ausgestaltung werden

- bei einem Antrieb einer installierten Applikation im Betrieb Informationen über betriebsmäßige Werte der Größen erfasst, insbesondere unter Verwendung von Sensoren hierzu,

- und diese Werte als Applikationsdaten oder Daten des Lastkollektivs verwendet,

- und daraus der optimale und/oder kostengünstigste Antrieb ermittelt und verglichen mit dem in der Applikation vorhandenen.

Von Vorteil ist dabei, dass je nach Kundenwunsch und Applikation oder auch Wissen des Kunden über seine Applikation die Schnittstelle für das Verfahren verwendbar ist..

Bei einer vorteilhaften Ausgestaltung ist die Dateneingabe an einem ersten Rechner ausführbar, der über Internet und/oder andere Netzwerke, beispielsweise Intranet, mit mindestens einem weiteren Rechner verbindbar ist, wobei der weitere Rechner zur Durchführung des Verfahrens verwendbar ist, insbesondere auch zur Auftragsauslösung und zur Einbindung der Fertigung. Von Vorteil ist dabei, dass am weiteren Rechner das Verfahren nicht ausgeführt wird. Der Kunde gibt also an seinem Rechner mittels seines Internet-Browsers seine Applikationsdaten, insbesondere in grafischer Weise, ein und erhält dann von dem ersten per Internet verbundenen Rechner einen Vorschlag für den optimalen Antrieb. Er benötigt also keine Installation eines Programms auf seinem Rechner, vermeidet die damit verbundenen Probleme und bekommt immer die neueste Version des zum Verfahren gehörenden Programms angeboten. Außerdem ist der Anbieter des Programms geschützt gegen Raubkopien..

Weitere vorteilhafte Ausgestaltungen ergeben sich aus den Unteransprüchen

Die Erfindung wird nun anhand von Abbildungen näher erläutert;

Die Applikationsdaten eines Antriebs, insbesondere Getriebemotors, umfassen Daten über vorgesehene Massen, Geschwindigkeiten, Beschleunigungen, Verzögerungen, Kräfte, Drehmomente, Leistungen, geometrische Daten, Reibungskräfte oder dergleichen. Darüber hinaus gehören bei speziellen Applikationen auch Angaben zur Lebensdauer, Umgebungs- und oder Betriebstemperatur zu den Applikationsdaten. Auch sind gewünschte Angaben zur Sicherheit, wie minimaler und/oder maximaler Sicherheitsfaktor eingebbar.

Bei einem ersten erfindungsgemäßen Verfahren und bei der erfindungsgemäßen Anordnung werden zuerst Fahrdiagramm und/oder Applikationsdaten eingegeben ohne Angaben zum Typ der Anlage oder Maschine,

Bei einem anderen erfindungsgemäßen Verfahren und bei der erfindungsgemäßen Anordnung wird zuerst der Typ der Anlage oder Maschine ausgewählt..

Danach sind die jeweils typischen für diese Anlage oder Maschine relevanten Applikationsdaten eingebbar Ein wesentliches Ziel der Erfindung ist es dabei, ein quantitatives Mittel zu erhalten und/oder anzuwenden zur Bestimmung des für die Anlage oder Maschine bestgeeignetsten Antriebs.. Dies ist wesentlicher Bestandteil im Rahmen einer Projektierung und/oder Auslegung von Anlagen oder Maschinen..

Das Auswählen beziehungsweise die Eingabe von Daten sowie das Ausgeben von Daten erfolgt über die erfindungsgemäße Schnittstelle der Anordnung. Die Anordnung ist bei einem erfindungsgemäßen Ausführungsbeispiel mittels eines einzigen Rechnersystems ausführbar. Bei einem anderen erfindungsgemäßen Ausführungsbeispiel ist die Anordnung durch ein Netzwerk von Rechnersystemen ausführbar, wie beispielsweise das gesamte Internet.. Dabei ist die Schnittstelle einem ersten Rechnersystem zugeordnet und das Verfahren wird auf einem oder mehreren Rechnersystemen, die zum Datenaustausch als Netz verbunden sind, ausgeführt. Vorteilhaft ist dabei, dass die Aktualisierung von Daten und/oder Programmen beim Hersteller der Getriebebaureihe ausgeführt wird und der Nutzer des Verfahrens nur eine graphische Schnittstelle benötigt, die zur Eingabe und Ausgabe von Daten verwendbar ist, Beispielsweise ist bei einem über Internet verbundenen.Rechnersystem ein handelsüblicher Internet-Browser verwendbar. Als solches Rechnersystem ist nicht nur ein Computer verwendbar sondern auch ein tragbares Kommunikationsgerät, wie Handy oder Organizer. Somit ist der Antrieb in verschiedenster Weise an verschiedensten Orten bestimmbar. Bei einer weiteren Ausführung ist mit dem genannten verbundenen Rechnersystem auch eine Anlage zur Fertigung verbunden, die den bestimmten Antrieb fertigt. Somit ist beim Auslegen einer Applikation durch Eingabe der Applikationsdaten an einem beliebigen Ort der Welt eine Fertigung des bestimmten Antriebs auslösbar

Das Auswählen des Typs der Anlage oder Maschine erfolgt bei einem erfindungsgemäßen Ausführungsbeispiel durch Anklicken eines grafischen Objektes, das die Applikation charakteristisch darstellt. Die Eingabe von Daten ist einerseits durch Tastatureingaben und alternativ durch Tastatur- und Mauseingaben ausführbar.. Insbesondere ist auch das Verändern von graphischen Darstellungen, die mit den Anzeigemitteln angezeigt werden, ermöglicht. Statt Tastatur und Maus sind auch andere Eingabemittel verwendbar, wie insbesondere berührungssensitive Bildschirme

Bei dem erfindungsgemäßen Verfahren werden mit den Daten der zum jeweiligen Antrieb gehörigen Last, wie beispielsweise geometrische Daten, minimal vorgesehene und maximal vorgesehene Massen und Trägheitsmomente, und den Daten für den vorgesehenen Betrieb, wie beispielsweise vorgesehene zeitliche Verläufe der Drehzahl, der Beschleunigung, der Verzögerung und/oder des Drehmoments, unter Verwendung der bekannten Daten aller Antriebe einer herstellereigenen Baureihe der optimale Antrieb bestimmt oder gleichfalls optimale aber mechanisch andersartig ausgeführte Antriebe dem Benutzer vorgeschlagen.

Dazu wird mit den Daten des Antriebs, den Betriebsdaten und Applikationsdaten oder den Daten über das unten näher erläuterte Lastkollektiv für jeden Antrieb der gesamten Baureihe ein Betriebssicherheitsfaktor $S_B$ bestimmt. Alle Antriebe, für die der Betriebssicherheitsfaktors $S_B$ größer als 1 ist, werden dem Benutzer als Ergebnis vorgeschlagen, insbesondere angezeigt oder als Datenfile ausgegeben" Unter diesen vorgeschlagenen Antrieben ist es danach dem Benutzer ermöglicht, den für seine spezielle Anwendung optimalen Antrieb auszuwählen. Bei einem anderen erfindungsgemäßen Ausführungsbeispiel wird der sicherste Antrieb, also der den größten Betriebssicherheitfaktor aufweisende, ausgewählt oder derjenige, der weitere, zuvor eingegebene Bedingungen, wie beispielsweise eine erforderliche Bauform, eine gewünschte Orientierung, niedrigste Kosten oder dergleichen, erfüllt. In Weiterbildung wird dann dieser Antrieb von einer zum Datenaustausch verbundenen Fertigungsanlage gefertigt und an den Ort der Applikation zur Montage ausgeliefert,

In einem ersten erfindungsgemäßen Ausführungsbeispiel werden die zu den Applikationsdaten zugehörigen Werte als statische Werte vorgegeben. Die Applikationsdaten oder eine entsprechende Teilmenge davon sind aber auch als dynamische Werte, also zeitabhängig, vorgebbar, wobei die Applikationsdaten oder die Teilmenge somit entweder als Fahrdiagramme in Form von Weg-Zeit- Diagramm, Geschwindigkeits-Weg- Diagramm, Beschleunigungs-Zeit-Diagramm, Beschleunigungs-Weg-Diagramm oder Geschwindigkeits-Zeit-Diagramm eingegeben werden oder als zeitliche Drehmoment, Axialkraft-, Querkraft- und/oder Drehzahl-Verläufe. Statt Weg, Geschwindigkeit, Beschleunigung sind auch Winkel, Winkelgeschwindigkeit, Winkelbeschleunigung vorteilhaft verwendbar.

In weiteren erfindungsgemäßen Ausführungsbeispielen sind als Applikationsdaten auch die projektierte Lastwechselzahl zu Wertebereichen von Größen eingebbar. Insbesondere sind also die jeweiligen Lastwechselzahlen zu einem ersten, zweiten und gegebenenfalls zu einem oder mehreren weiteren Bereichen von Werten für Drehmoment eingebbar. Zu jeder Lastwechselzahl und zugehörigen Drehmoment sind mindestens Werte einer weiteren Größe eingebbar. Insbesondere sind als Größen sowohl die Komponenten und der Angriffspunkt der Querkraft eingebbar sowohl als auch die Axialkraft. Weitere eingebbare Größen sind eine gewünschte Lebensdauer, Umgebungstemperatur und/oder Betriebstemperatur.

Mittels einer grafischen Benutzerschnittstelle werden Daten, insbesondere unter Verwendung einer Maus, eingegeben. Die Mauseingabe wird dabei bevorzugt für die grafische Eingabe eines Fahrdiagramms eingesetzt,

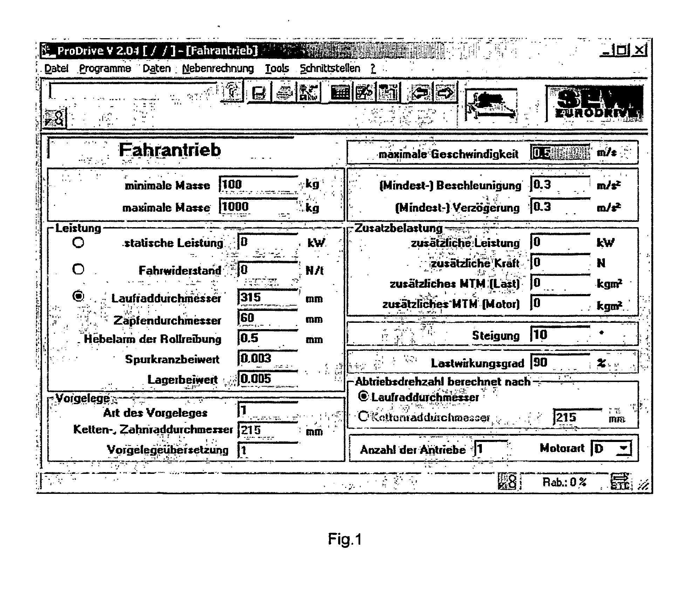

In der Figur 1 ist eine beispielhafte Eingabemaske für die Eingabe per Tastatur schematisch gezeigt. Die Werte der Größen werden dabei mittels der Tastatur eingegeben.

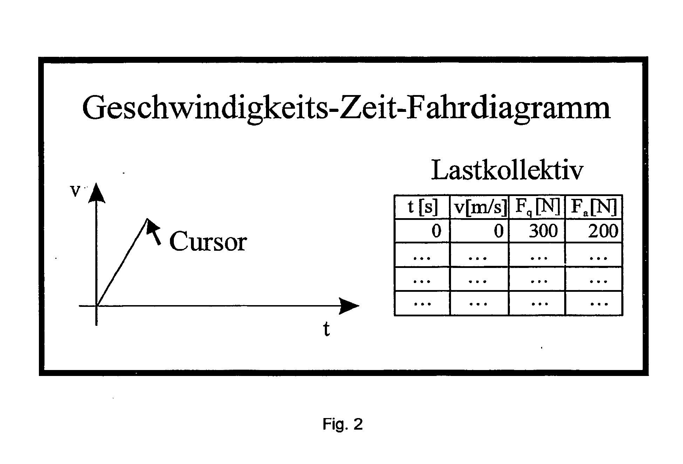

In der Figur 2 ist eine beispielhafte Eingabemaske für das grafische Eingeben unter Verwendung der Maus gezeigt. Dabei werden Linien angeklickt und dann durch Ziehen der Maus verformt. In der Eingabemaske werden zugehörige Werte angezeigt und entsprechend dem Ziehen verändert.

In weiteren erfindungsgemäßen Ausführungsbeispielen sind die Daten auch über eine Software,Schnittstelle ein- und ausgebbar.. Somit werden Pre- und Postprocessingfunktionen ermöglicht. Dadurch ist es auch ermöglicht, reale Daten einer Applikation als Datenfile einzugeben, wobei diese realen Daten mittels Messmitteln an einem bei einer bestehenden Applikation installierten Antrieb aufgenommen sind.

Bei dem erfindungsgemäßen Verfahren wird zur Ermittlung der Belastung aus der Anfahrdynamik ein idealisiertes Antriebssystem verwendet.

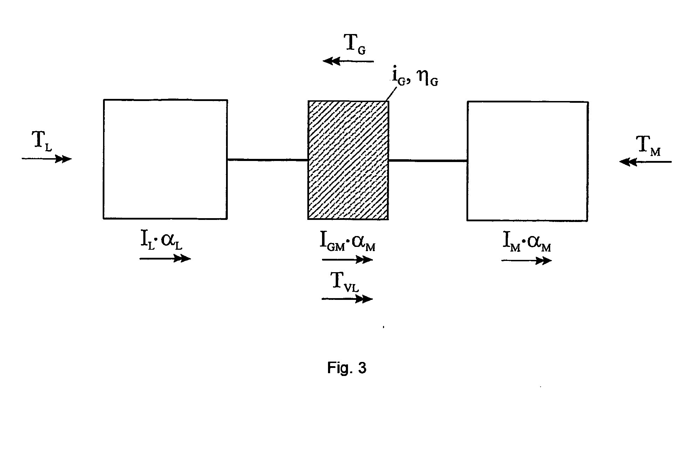

In Figur 3 ist das mechanische Ersatzschaltbild eines solchen Systems in idealisierender Weise dargestellt. Dabei wird beim Motor das Motormoment $M_M$ und Massenträgheitsmoment Motor $I_M$ vorgesehen. Bei der Last sind Lastmoment $M_L$ und lastseitiges Trägheitsmoment $I_L$ kennzeichnend. Das zu übertragende Getriebemoment $M_G$, das auf die Lastseite bezogene Verlustmoment des Getriebes $M_{VL}$ sowie das auf die Motorseite bezogene Trägheitsmoment $I_{GM}$ des Getriebes kennzeichnen den Antrieb weiter. Wesentliche Merkmale für den Antrieb sind auch die Betriebsdaten Winkelbeschleunigungen $\alpha_L$ und $\alpha_M$. Des Weiteren sind für jeden Antrieb die Größen Getriebeübersetzung $i_G$, Getriebewirkungsgrad $\eta_G$, Steifigkeit c und Systemdämpfung d bekannt. Aus diesen Daten werden durch Momentengleichgewichtsbildung und Umformungen das gesuchte übertragene Getriebemoment $M_G$ für den Anfahrvorgang ermittelt..

Jede Applikation wird durch eine Kombination von Belastungen, die auf das Getriebe wirkt, gemäß der Betriebsart beim erfindungsgemäßen Verfahren gekennzeichnet. Dabei unterscheidet man zwischen Belastungen im stationären und im dynamischen Zustand.. Ein stationärer Zustand liegt vor, wenn die Drehzahl konstant bleibt. Von einem dynamischen Zustand spricht man hingegen, wenn der Antrieb einer Drehzahländerung unterliegt..

Durch Klassenbildung der äußeren Belastung, also Einteilung in Wertebereiche der zugehörigen Größe, erhält man aus dem realen Belastungsverlauf ein Lastkoflektiv. Hierbei sind die auf das Getriebe wirkenden Größen wertemäßig geordnet.

Dabei umfassen in einem erfindungsgemäßen Ausführungsbeispiel die Größen Drehmomente, Lastwechselzahl, Quer- und Axialkräfte. Daher ist das zugehörige Lastkollektiv durch Punkte in einem mindestens vierdimensionalen Raum kennzeichenbar. Beispielsweise beschreibt ein einziger Punkt in dieser Darstellung, dass der entsprechende Wert für Drehmoment, der entsprechende Wert für Axialkraft und der entsprechende Wert für Querkraft mit der zugehörigen Lastwechselzahl bei der Anwendung gemäß den Betriebsdaten auftreten. Dabei ist jedem Wert mittels der beschriebenen Klasseneinteilung ein jeweiliger Wertebereich zugeordnet" Drehmomente, die innerhalb eines Wertebereiches der Klasseneinteilung variieren, werden als dieser zu der Klasse zugehörige Wert angesehen. Ein jeweiliger genannter Punkt wird im Folgenden auch als Teilkollektiv bezeichnet.

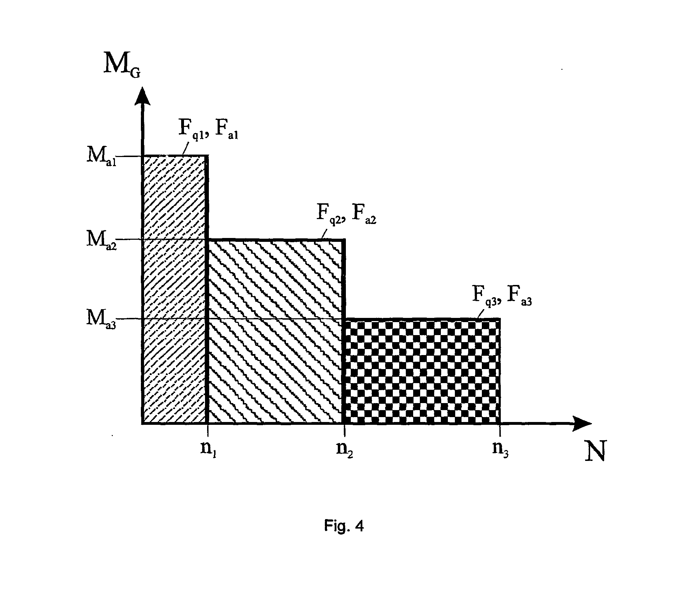

In der Figur 4 ist eine Applikation beschrieben, bei deren Betrieb nur drei Drehmomente auftreten, beziehungsweise nur Drehmomente aus den drei gemäß Klasseneinteilung zugehörigen Wedebereichen. Bei der Applikation wird für einen ersten Zeitabschnitt ein Anfahrmoment $M_{a1}$, vorgesehen, für einen zweiten Zeitabschnitt ein Bremsmoment $M_{a2}$ vorgesehen und danach für einen dritten Zeitabschnitt ein Haltemoment $M_{a3}$ vorgesehen. Dieser Vorgang wird während der Gebrauchsdauer, also beispielsweise über Jahre hinweg, regelmäßig, beispielsweise täglich, mehrmals wiederholt. Daraus ist für das jeweilige Moment eine Lastwechselzahl herleitbar. Bei dieser speziellen beispielhaften Applikation tritt bei dem jeweiligen Drehmoment immer nur ein innerhalb eines zu einer Klasse zugehörigen Wertebereiches liegender Wert von Axialkraft und von Querkraft auf. Daher sind diese äußeren Quer- und Axialkräfte hier als Attribute den jeweiligen Drehmomenten beifügbar und die Darstellung zweidimensional ausführbar Die Breite des jeweiligen Teilkollektivbalkens, also $n_1$, $n_2$ oder $n_3$ entspricht der Lastwechselzahl an der Abtriebswelle. Von allen Größen werden hier zur Darstellung in Figur 4 nur deren Beträge verwendet.

Bei dem erfindungsgemäßen Verfahren werden anfangs eingegebene Größen des vierdimensionalen Lastkollektivs bei querkraft- und/oder axialkraft-beanspruchten Komponenten für jedes Teilkollektiv reduziert auf äquivalente Größen, insbesondere Drehmoment. Diese äquivalente Größe entspricht also nicht der real wirkenden Größe, macht aber die Erfindung in einfacher Weise ausführbar mit gleichzeitiger geringer benötigter Rechenzeit. Außerdem wird durch die äquivalenten Größe ein Mittel zur quantitativen Festlegung geschaffen, aus weichem dann der Betriebssicherheitsfaktor zum optimierten Auswählen von Antrieben aus einer Baureihe bestimmbar ist..

Im weiteren Verlauf werden weitere Verfahrensschritte des erfindungsgemäßen Verfahrens für die Komponenten Abtriebswellenquerschnitt, Abtriebswellenloslager und feste, schwimmende oder angestellte Abtriebswellenlager beispielhaft beschrieben Für weitere Komponenten, wie beispielsweise die Antriebswelle, ist ein analoges Vorgehen ausgeführt.

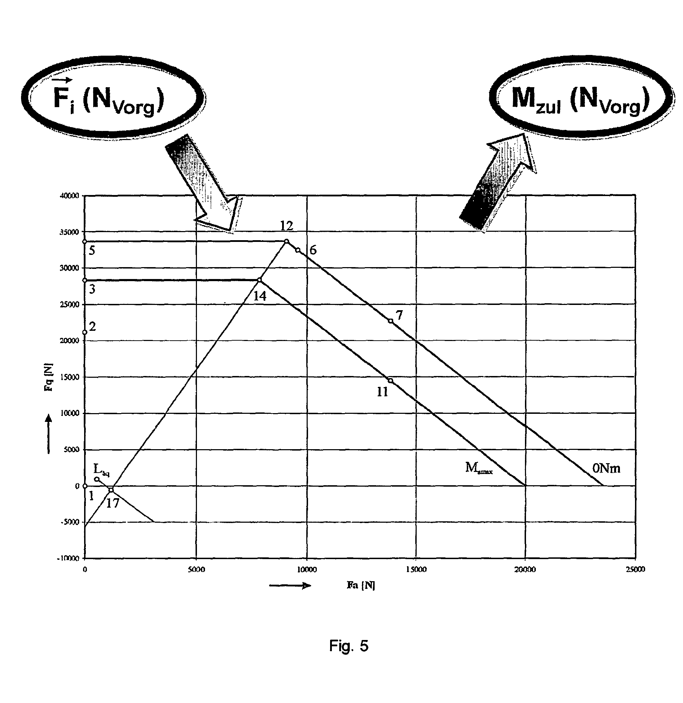

In diesen weiteren Verfahrensschritten wird gemäß Figur 5 für jeweils ein Teilkollektiv aus der vorgegebenen Lastwechselzahl und der zugehörigen Axial- und/oder Querkraft ein zulässiges äquivalentes Drehmoment bei vorgegebener Lastwechselzahl bestimmt.

Dazu werden Diagramme gemäß Figur 5, 6, 7 und 8 erstellt, die mittels einer sehr großen Getriebedatenbank unter Verwendung der Normen, wie DIN 743, bekannter physikalischer Gleichungen und Angaben von Lagerherstellern errechnet sind.

Wesentliches Merkmal ist dabei, dass bei dem erfindungsgemäßen Verfahren eine geschlossene Darstellung verwendet wird zur Beschreibung der äquivalenten Grenzbelastung für ein Teilkollektiv für eine Komponente.

Zur genaueren Ausführung wird dieses Vorgehen für drei folgende Komponenten erläutert, die bei Berücksichtigung von der Last stammenden Axial- und Querkräften betrachtet werden müssen. Für je nach Antrieb auftretenden weitere Komponenten wird ein analoges Vorgehen ausgeführt"

Die äquivalente Grenzbelastung bei einer Abtriebswelle soll als zulässiges Drehmoment beschrieben werden, Dazu wird aus der genannten Getriebedatenbank unter Verwendung der Normen und bekannter physikalischer Gleichungen in ausreichender Genauigkeit eine Grenzbelastungskurve abgeleitet. Dabei ist die als Querkraft-Drehmoment-Diagramm dargestellte Grenzbelastungskurve als Ellipse bestimmt.. Der Vorteil ist dabei, dass nur zwei Parameter zur Kennzeichnung der Grenzbelastungskurve für die Abtriebswelle bei gegebenem Querschnitt Q genügen.

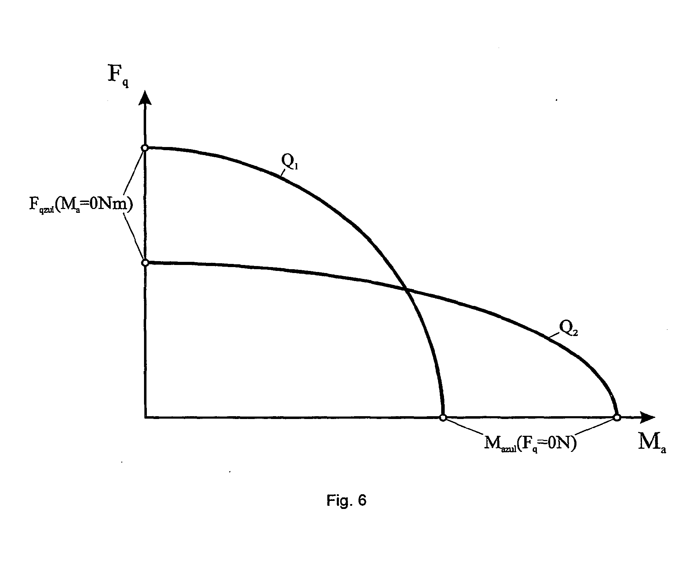

Bei einer Abtriebswelle treten oft mehrere Abschnitte mit jeweils verschiedenen Durchmessern oder Abschnitte, die Geometrieunstetigkeiten aufweisen, auf, beispielsweise bis zu 18 Abschnitte mit jeweils verschiedenen Durchmessern und einem unstetigen Absatz als Übergang zwischen den Abschnitten. Diese Abschnitte werden als verschiedene Komponenten behandelt. In der Figur 6 sind nur zwei Grenzbelastungskurven für einen ersten Querschnitt $Q_1$ und für einen weiteren Querschnitt $Q_2$ gezeigt. Die Grenzbelastungskurve ist jeweils als Drehmoment-Querkraft-Diagramm aufgetragen. Die Grenzbeiastungslcurve grenzt hier den dauerfesten Bereich gegen den zeitfesten Bereich ab Bei weiteren erfindungsgemäßen Ausführungsbeispielen werden weitere Sicherheiten berücksichtigt, die sowohl aus einer Norm, wie DIN 743, DIN 3990, DIN 3996 und dergleichen, entnehmbar sind als auch herstellereigen vorgebbar sind.

Die Grenzbelastungskurve für eine Abtriebswelle mit einem Abtriebswellenquerschnitt ist also als

$$\left(\frac{M_a}{M_{azul}(F_q=0N)}\right)^2 + \left(\frac{F_q}{F_{qzul}(M_a=0Nm)}\right)^2 = 1$$

beschreibbar, wobei $M_a$ das Drehmoment, $M_{azul}(F_q=0N)$ das zulässiges Drehmoment bei einer Querkraft von 0N, $F_q$ (ni) : die äußere Querkraft eines Teilkollektivs, $F_{qzul}(M_a=0Nm)$ die zulässige äußere Querkraft bei einem Drehmoment von 0 Nm ist. Bei verschiedenen Querschnitte sind die Parameter $F_{qzul}(M_a=0 Nm)$ und $M_{azul}(F_q=0 N)$ verschieden.

Daraus ergibt sich das maximal zulässige Drehmoment bei einer Abtriebswelle mit einem Querschnitt zu:

$$M_{azul} = M_{azul}(F_q = 0N) \cdot \sqrt{1 - \left(\frac{F_q(n_i)}{F_{qzul}(M_a = 0Nm)}\right)^2} \quad ,$$

wobei $M_{azul}$ das zulässige Drehmoment , $M_{azul}(F_q=0N)$ das zulässige Drehmoment bei einer Querkraft von 0N, $F_q$(ni) die äußere Querkraft eines Teilkollektivs und $F_{qzul}(M_a=0Nm)$ die zulässige äußere Querkraft bei einem Drehmoment von 0 Nm ist.

Auf diese Weise ist nun aus der Querkraft das zulässige Drehmoment bestimmbar, das auch als äquivalentes Drehmoment bezeichenbar ist, Je nach Applikationsdaten bzw. Lastkollektiv ergeben sich somit verschiedene Werte für dieses zulässige Drehmoment..

Bei anderen Komponenten wird eine analoge Berechnungsweise angewandt, die wiederum zum Ziel hat, ein solches zulässiges Drehmoment zu bestimmen..

Als zweites Beispiel wird nun die Berechnungsmethode bei Abtriebswellenloslagern illustriert gemäß Bild 7, In einem Drehmoment-Querkraft-Diagramm sind dabei für verschiedene Abtriebsdrehzahlen Grenzbelastungskurven eingetragen, wobei hierbei Geraden verwendbar sind. Die Drehzahl $n_a$ ist hierbei die Standard-Abtriebsdrehzahl, also die Abtriebsdrehzahl des Getriebes bei Netzbetrieb. Die Gerade für n=1 min$^{-1}$ beschreibt dabei die absolute Belastungsgrenze, wobei wiederum herstellereigen Sicherheiten berücksichtigbar sind. Eine weitere Verringerung der Drehzahl hat keine Verbesserung der Tragfähigkeit zur Folge.

Das zulässige Drehmoments $M_{azul}$ für eine bestimmte Drehzahl wird nun folgendermaßen ermittelt;

Zunächst wird aus dem beispielhaften Datenkennwert 1, also (Fq$_1$, 0), und aus dem beispielhaften Datenkenn-

wert 2, also (Fq$_2$ , M$_{amax}$), eine Steigung m der Grenzbelastungskurven ermittelt, also gilt: $m = \dfrac{F_{q2} - F_{q1}}{M_{a\,max}}$ , wobei m

die Steigung der Grenzbelastungskurven, F$_{q1}$ und F$_{q2}$ aus den Datenkennwerten 1 und 2 entnommen sind, M$_{amax}$ das maximale Getriebeabtriebsmoment ist.

Anschließend wird mit dem Datenkennwert 1 und mit dem Datenkennwert 3, also (F$_{q3}$, 0), die Lage der gesuchten Belastungskurve bestimmt. Unter Verwendung des Datenkennwerts 3, also (F$_{q3}$, 0), wird unter Verwendung von Lagerherstellerangaben:

$$F_{qn_{aist}} = F_{q3} \cdot \left( \frac{n_0}{n_{aist}} \right)^{\frac{1}{\rho}} \leq F_{q1} \, ,$$

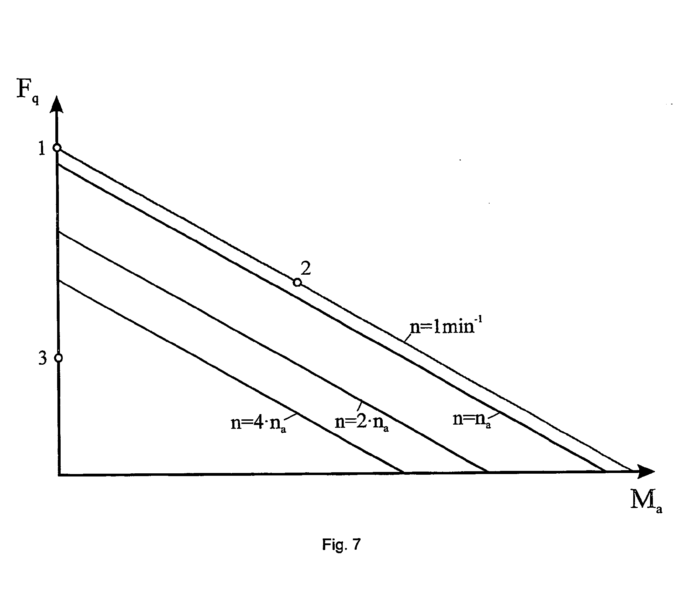

wobei F$_{qn_{xixt}}$ die zulässige Querkraft bei Betriebsabtriebsdrehzahl und M$_a$=0 Nm, n$_{aist}$ die Betriebsabtriebsdrehzahl, p der Steigungsexponent und n$_0$ die Standard-Drehzahl ist. Die senkrechten Abstände der Geraden zur Grenzgerade in der Figur 7 wachsen exponentiell.

Schließlich wird aus den beiden berechneten Werten und der äußeren Querkraft das zulässige Drehmoment M$_{azul}$ des Lagers bestimmt

$$M_{azul} = \frac{F_{qn_{xist}} - F_q(n_i)}{m} \quad ,$$

wobei M$_{azul}$ das zulässiges Drehmoment, F$_{qn_{aist}}$ die zulässige Querkraft bei Betriebsabtriebsdrehzahl und M$_a$=0Nm, F$_q$(n$_i$) die äußere Querkraft des Teilkollektivs und m die Steigung der Grenzbelastungskurven ist.

Als drittes Beispiel wird nun die Berechnungsmethode bei festen, schwimmenden oder angestellten Abtriebslagern illustriert gemäß Bild 8a.

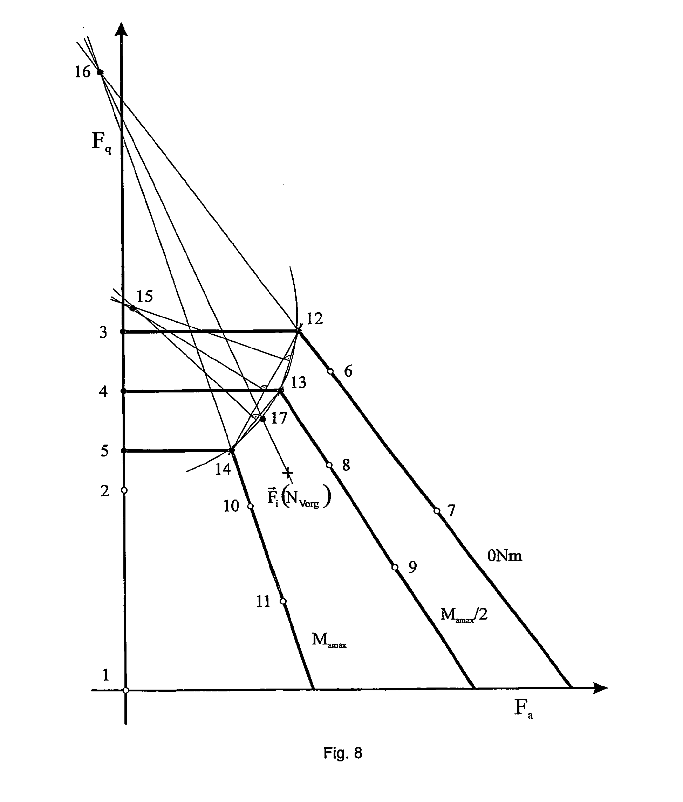

Der Einsatz einer festen, schwimmenden oder angestellten Abtriebslagerung erfordert es, das zulässige Drehmoment M$_{azul}$ nach einem Diagramm gemäß Figur 8a zu bestimmen. Zunächst wird die aufwendigere Berechnung für eine angestellte Lagerung beschrieben. Anschließend wird vorgestellt, welche Vereinfachungen sich bei Einsatz einer festen oder schwimmenden Lagerung ergeben:

Aus der genannten Getriebedatenbank unter Verwendung der Normen und bekannter physikalischer Gleichungen werden die Punkte 1, 2, 6, 7, 8, 9, 10, 11 bestimmt. Aus den Punkten 1 und 2 erhält man mit den bekannten Werten für die Querkraft und das Drehmoment durch Inter- bzw. Extrapolation die Punkte 3 bis 5, Diese entsprechen den Querkraftdeckeiwerten für M$_a$=ONm, M$_a$=M$_{amax}$/2 und M$_a$=M$_{amax}$. Der Schnitt der Geraden aus den Punkten 6 und 7 mit der Deckelgeraden durch Punkt 3 ergibt den Punkt 12. Analog geht man bei den Werten für M$_a$=M$_{amax}$/2 bzw. M$_a$=M$_{amax}$ vor, so dass man die Punkte 13 und 14 erhält, Punkt 15 ist der Mittelpunkt eines Kreises, der mit ausreichender Genauigkeit durch die Punkte 12 bis 14 in ausreichender Näherung geht. Unter ausreichender Näherung wird in dieser Schrift eine Toleranz verstanden, die 10% unterschreitet, wobei aber in Einzelfällen es zweckdienlicher und vorteiliger ist, eine Toleranz von 1 % zu unterschreiten.. Als Nächstes wird der Punkt 16 als Schnittpunkt der Geraden durch die Punkte 6 und 7 bzw. 10 und 11 bestimmt..

Die gesamte Kennlinienschar im Querkraft-Axialkraft-Diagramm ist nun erzeugbar, da alle Eckpunkte aller jeweiligen Kennlinien auf dem bestimmten Kreis mit Punkt 15 als Mittelpunkt liegen. Diese Kennlinienschar stimmt mit ausreichender Genauigkeit mit der real existierenden überein.

Zur Bestimmung des gesuchten zulässigen äquivalenten Drehmomentes des Teilkollektives wird nun im Querkraft-Axialkraft-Diagramm der Punkt $\vec{F}_i$(N$_{Vorg}$) eingezeichnet, also derjenige Punkt, der die für das Teilkollektiv vorgegebenen Werte für Axial- und Querkraft aufweist,

Anschließend erfolgt ein Schnitt der Geraden durch die Punkte 16 und diesen Punkt $\vec{F}_i$(N$_{vorg}$) mit dem Kreisbogen, der als Mittelpunkt den Punkt 15 besitzt. Das Ergebnis ist Punkt 17, aus dessen zulässigem Querkraftwert nun das zulässige äquivalente Drehmoment M$_{azul}$(N$_{vorg}$) bestimmt wird.

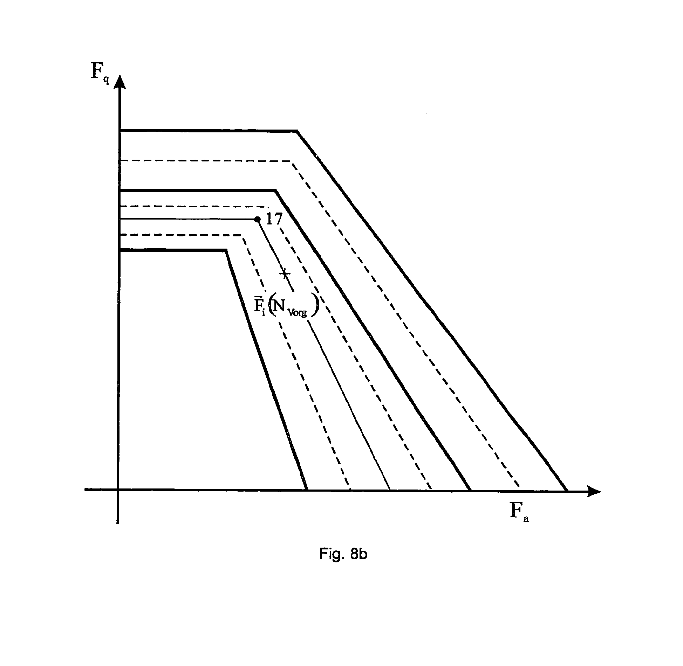

Bei weiteren erfindungsgemäßen Ausführungsbeispielen sind statt des Kreises auch andere nicht-lineare Kurven mit endlichem Krümmungsradius verwendbar, die dann allerdings mehr Parameter aufweisen.. Bei weiteren erfindungsgemäßen Ausführungsbeispielen ist gemäß Figur 8b die gesamte Kennlinienschar mit ausreichend vielen, derart dicht liegenden Kennlinien gespeichert, dass der Eckpunkt 17 aus Figur 8b entweder direkt auf einer Kennlinie zu finden ist oder durch lineare Interpolation bestimmbar ist.

Bei Verwendung von festen oder schwimmenden Lagerungen als Komponenten ist ein Diagramm gemäß Figur 5 vorgesehen. Aus der genannten Getriebedatenbank unter Verwendung der Normen und bekannter physikalischer Gleichungen ergibt sich, dass die gemäß Figur 8a fallenden Geraden durch die Punkte 6 und 7, 8 und 9 bzw. 10 und 11 nun in Figur 5 parallel sind Es entfallen bei der Konstruktion der Grenzbelastungskennlinien die Punkte 4, 8, 9, 10, 13, 15 und 16 aus Figur 8a. Zur Festlegung der Grenzbelastungskennlinien genügen nun 4 statt 5 Parameter, weil statt des Kreises gemäß Figur 8a nun eine Gerade verwendbar ist, die in Figur 5 durch die Punkte 12 und 14 geht. Der Punkt 17 wird daher mittels des Schnitts der Geraden durch die Punkte 12 und 14 mit der parallelen Geraden zur Geraden durch die Punkte 6 und 7 durch den Punkt $\vec{F}_i(N_{vorg})$ erzeugt. Somit ist auch bei festen oder schwimmenden Lagerungen in einem Querkraft-Axialkraft-Diagramm ein Wert für zulässiges äquivalentes Drehmoment bestimmbar, welcher der in der Applikation herrschenden Quer- und Axialkraft für das entsprechende jeweilige Teilkollektiv entspricht.

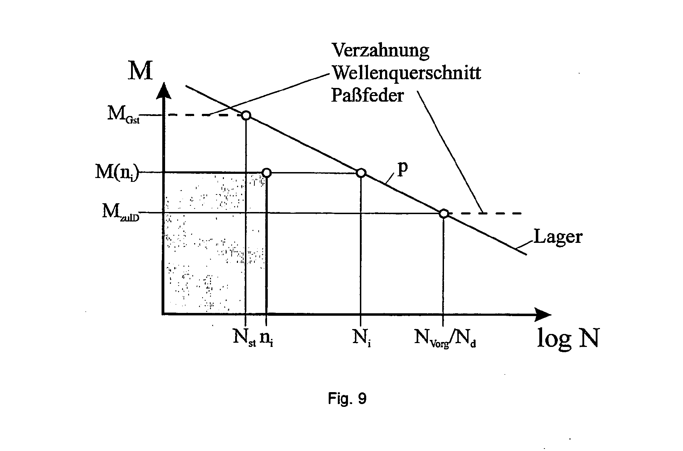

Ist das zulässige Drehmoment $M_{azulD}$ bekannt, wird die komponenten- und teilkollektivabhängige Bruchlastspielzahl $N_i$ ermittelt Die grundsätzliche Vorgehensweise ist in Figur 9 dargestellt..

Es ist dabei zu beachten, dass die dauerfest auslegbaren Elemente Verzahnung, Wellenquerschnitt und Passfeder zwei in der Figur 9 gestrichelt eingezeichnete Grenzen aufweisen. Diese beiden Grenzen beschreiben die statische und die dauerfeste Belastungshöhe, zwischen denen sich das zulässige Drehmoment bewegt..

Dazwischen ist für die Grenzbelastung

$$N_i = N_{vorg} \cdot \left( \frac{M_{azulD}}{M(n_i)} \right)^p \quad ,$$

wobei $N_i$ die Bruchlastspielzahl, $N_{Vorg}$ die vorgegebene Lastwechselzahl, $M_{azulD}$ das zulässige äquivalente Drehmoment oder Schadensakkumulafionsdrehmoment, $M(n_i)$ das Drehmoment des ursprünglichen eingegebenen Teilkollektivs und p der Steigungsexponent ist,

Mit Hilfe der zuvor für jedes Teilkollektiv ermittelten Bruchlastspielzahlen $N_I$ und den vorhandenen Lastspielzahlen $n_i$ lässt sich für das jeweilige Getriebeelement ein Einzelbetriebssicherheitsfaktor $S_{Bj}$ angeben, der eine reziproke Schadenssumme nach Palmgreen-Miner darstellt. Die beschreibende Gleichung hierfür ist gemäß Schadensakkumulationshypothese.

$$S_{Bj} = \frac{1}{\sum_i \frac{n_i}{N_i}}$$

wobei

$S_{Bj}$      der Einzeibetriebssicherheitsfaktor,
$n_i$      die Teil-Lastspielzahl,
$N_i$      die Bruchlastspielzahl,
i      die Anzahl der Teilkollektive und
j      die Anzahl der Getriebeelemente ist.

Als Gesamtbetriebssicherheitsfaktor $S_B$ wird daher das Minimum aller berechneten Einzelbetriebssicherheitsfaktoren $S_{Bj}$ angeben. Der Gesamtbetriebssicherheitsfaktor $S_B$ muss dabei größer oder gleich 1 sein:

$$S_B = \underset{j}{MIN}(S_{Bj}) \geq 1$$

wobei

$S_B$      der Gesamtbetriebssicherheitsfaktor,
$S_{BJ}$      der Einzelbetriebssicherheitsfaktor und

j      die Anzahl der Getriebeelemente..

**Patentansprüche**

1.  Verfahren zur Bestimmung und/oder Fertigung eines Antriebs oder Teilen für einen Antrieb aus einer Baureihe von Antrieben,
wobei die Baureihe mindestens eine Baugröße umfasst, wobei jede Baugröße mindestens eine Variante von Antrieben umfasst,
**dadurch gekennzeichnet, dass**
aus eingegebenen und/oder übermittelten Applikationsdaten und/oder Daten eines Lastkollektivs, insbesondere eines mehrere Teilkollektive umfassenden Lastkollektivs, für jede Variante der Baureihe ein Wert einer Größe zur quantitativen Erfassung der Übertastfahigkeit bestimmt wird,
und nur Varianten bestimmt und/oder gefertigt werden, bei denen der Wert der Größe eine Bedingung erfüllt, insbesondere einen kritischen Wert überschreitet oder extremal ist,
wobei als GröBe ein Betriebssicherheitsfaktor $S_B$ vorgesehen ist.

2.  Verfahren nach einem der vorangegangenen Ansprüche,
**dadurch gekennzeichnet, dass**
nur Varianten bestimmt und/oder gefertigt werden, deren Betriebssicherheitsfaktor $S_B$ als Bedingung den Wert 1 überschreitet.

3.  Verfahren nach einem der vorangegangenen Ansprüche,
**dadurch gekennzeichnet, dass**
nur diejenige Variante bestimmt und/oder gefertigt wird, die für die Applikation, insbesondere gemäß weiterer Anforderungen wie auch beispielsweise geometrische Anforderungen, der optimale und/oder kostengünstigste Antrieb ist oder der Antrieb mit der längsten Lebensdauer, falls für mehr als einen Antrieb der Betriebssicherheitsfaktors $S_B$ größer ist als 1.

4.  Verfahren nach einem der vorangegangenen Ansprüche,
**dadurch gekennzeichnet, dass**
der Betriebsslcherheitsfaktor $S_B$ bei einem für eine Last vorgesehenen Antrieb, umfassend Getriebe und Motor, bestimmt wird, wobei er
aus einem mindestens dreidimensionalen Lastkollektiv ein Betriebssicherheitsfaktors $S_B$ für den Antrieb oder zumindest für dessen Getriebe bestimmt wird.

5.  Verfahren nach einem der vorangegangenen Ansprüche,
**dadurch gekennzeichnet, dass**
zumindest beim Getriebe für jede Komponente j ein Einzelbetriebssicherheitsfaktors $S_{Bj}$ bestimmt wird und daraus das Minimum aller Einzelbetriebssicherheitsfaktoren $S_{Bj}$ als Betriebssicherheitsfaktors $S_{Bi}$ verwendet oder bestimmt und ausgegeben und/oder angezeigt wird und zur Auftragsauslösung und zur Verbindung mit der Fertigung.

6.  Verfahren nach einem der vorangegangenen Ansprüche,
**dadurch gekennzeichnet, dass**
das Lastkollektiv mindestens vierdimensional ist und mindestens Informationen über den zeitlichen Verlauf der Größen Drehmoment, Drehzahl, Axialkraft und Querkraft umfasst..

7.  Verfahren nach einem der vorangegangenen Ansprüche,
**dadurch gekennzeichnet, dass**
das Lastkollektiv Richtung und Betrag der Querkraft
und/oder den Angriffspunkt der Querkraft umfasst.

8.  Verfahren nach einem der vorangegangenen Ansprüche,
**dadurch gekennzeichnet, dass**
das Lastkollektiv als Informationen über den zeitlichen Verlauf Lastwechselzahlen für die Größen umfasst..

9.  Verfahren nach einem der vorangegangenen Ansprüche,
**dadurch gekennzeichnet, dass**

das Lastkollektiv Teilkollektive umfasst, die durch Klassenbildung erzeugt werden, wobei die jeweiligen Klassen jeweilige Wertebereiche zugehöriger Größen umfassen.

**10.** Verfahren nach einem der vorangegangenen Ansprüche,
**dadurch gekennzeichnet, dass**
für ein jeweiliges Teilkollektiv für jede Komponente eine Grenzbelastungskennlinie bestimmt wird und mittels dieser Grenzbelastungskennlinie und mindestens einer vorgebbaren Größe, wie Querkraft und/oder Axialkraft, ein zulässiges Drehmoment bestimmt wird.

**11.** Verfahren nach einem der vorangegangenen Ansprüche,
**dadurch gekennzeichnet, dass**
verschiedene Durchmesser aufweisende Abschnitte von Wellen oder Abschnitte von Wellen, die Geometrieunstetigkeiten aufweisen, als separate Komponenten berücksichtigt werden.

**12.** Verfahren nach einem der vorangegangenen Ansprüche,
**dadurch gekennzeichnet, dass**
die Grenzbelastungskennlinie durch zwei Parameter parametrisierbar ist in einem Querkraft-Drehmoment-Diagramm
und/oder
die Grenzbelastungskennlinie durch vier oder fünf Parameter parametrisierbar ist in einem Querkraft-Axialkraft-Diagramm.

**13.** Verfahren nach einem der vorangegangenen Ansprüche,
**dadurch gekennzeichnet, dass**
mittels einer Grenzbelastungskennlinie in einem Querkraft-Drehmoment-Diagramm
aus einem Wert für Querkraft ein Wert für zulässiges äquivalentes Drehmoment bestimmt wird.

**14.** Verfahren nach einem der vorangegangenen Ansprüche,
**dadurch gekennzeichnet, dass**
mittels einer Grenzbelastungskennlinie in einem Axialkraft-Drehmoment-Diagramm
aus einem Wert für Axialkraft ein Wert für zulässiges äquivalentes Drehmoment bestimmt wird.

**15.** Verfahren nach einem der vorangegangenen Ansprüche,
**dadurch gekennzeichnet, dass**
mittels einer Grenzbelastungskennlinie in einem Axialkraft-Querkraft-Diagramm
aus einem Wert für Axialkraft und einem Wert für Querkraft ein Wert für zulässiges äquivalentes Drehmoment bestimmt wird..

**16.** Verfahren nach einem der vorangegangenen Ansprüche,
**dadurch gekennzeichnet, dass**
für jedes Teilkollektiv und für jede Komponente aus der zugehörigen vorgegebenen Lastwechselzahl, dem Wert für Drehmoment und dem jeweiligen zulässigen äquivalenten Drehmoment eine Bruchlastspielzahl bestimmt wird..

**17.** Verfahren nach einem der vorangegangenen Ansprüche,
**dadurch gekennzeichnet, dass**
zur Bestimmung des Betriebssicherheitsfaktors $S_B$ zumindest eine Schadensakkumulationahypothese verwendet wird.

**18.** Verfahren nach einem der vorangegangenen Ansprüche,
**dadurch gekennzeichnet, dass**
aus den jeweiligen Bruchlastspielzahlen und der zugehörigen Lastwechselzahl ein Einzelbetriebssicherheitsfaktor

$$S_{Bj} = \frac{1}{\sum_i \frac{n_i}{N_i}}$$ ermittelt wird, insbesondere gemäß Schadensakkumulationshypothese.

**19.** Verfahren nach einem der vorangegangenen Ansprüche,

**dadurch gekennzeichnet, dass**

die Temperatur der Umgebung, die maximale Betriebstemperatur und/oder die gewünschte Mindest-Lebensdauer des Antriebs von den eingegebenen Applikationsdaten, insbesondere umfassend geometrische Randbedingungen, umfasst werden.

20. Verfahren nach einem der vorangegangenen Ansprüche,
**dadurch gekennzeichnet, dass**
die thermische Motor- und/oder Getriebebelastbarkeit, insbesondere als thermische Grenzleistung, ausgegeben und/oder angezeigt wird..

21. Verfahren nach einem der vorangegangenen Ansprüche,
**dadurch gekennzeichnet, dass**
Daten über eine Schnittstelle ein- und ausgegeben werden, wobei
die Schnittstelle eine grafische Benutzerschnittstelle und/oder eine Datenschnittstelle zum Ein- und Ausgeben von Daten umfasst, wobei Applikationsdaten eingebbar sind,
die ein mehrere Teilkollektive umfassendes Lastkollektiv umfassen,
wobei zu jedem Teilkollektiv mindestens Daten, wie Werte oder zeitliche Verläufe, zu den drei Größen eingebbar sind.

22. Verfahren nach einem der vorangegangenen Ansprüche,
**dadurch gekennzeichnet, dass**
das Lastkollektiv

- durch ein zum jeweiligen Teilkollektiv zugehöriges Tupel, jeweils umfassend Lastwechselzahl, Drehmoment und mindestens eine weitere Größe, und/oder
- durch mindestens ein Fahrdiagramm, das mindestens zwei verschiedene Zustände der Applikation repräsentiert, wobei zu jedem Zustand Lastwechselzahl, Drehmoment und mindestens eine weitere Größe eingebbar sind.

23. Verfahren nach einem der vorangegangenen Ansprüche,
**dadurch gekennzeichnet, dass**
über die Schnittstelle Fahrdiagramme grafisch eingebbar sind, insbesondere unter Verwendung einer Maus,

24. Verfahren nach einem der vorangegangenen Ansprüche,
**dadurch gekennzeichnet, dass**
der Benutzer bei der Eingabe derart geführt wird, dass er nach Eingabe einer Information über Nicht-Vorhandensein einer Axialkraft und/oder Querkraft nur Drehmoment und Lastwechselzahl einzugeben veranlasst wird,
und dass er nach Eingabe einer Information über Vorhandensein einer Axialkraft und/oder Querkraft Informationen über Größen Axialkraft, Querkraft, Drehmoment und Lastwechselzahl einzugeben veranlasst wird, insbesondere Informationen über den zeitlichen Verlauf aller Größen,

25. Verfahren nach einem der vorangegangenen Ansprüche,
**dadurch gekennzeichnet, dass**

- bei einem Antrieb einer installierten Applikation im Betrieb Informationen über betriebsmäßige Werte der Größen erfasst werden, insbesondere unter Verwendung von Sensoren hierzu,
- und dass diese Werte als Applikationsdaten oder Daten des Lastkollektivs verwendet werden
- und dass daraus der optimale und/oder kostengünstigste Antrieb ermittelt wird und verglichen wird mit dem in der Applikation vorhandenen.

26. Verfahren nach einem der vorangegangenen Ansprüche,
**dadurch gekennzeichnet, dass**
die Dateneingabe an einem ersten Rechner ausgeführt wird, der über Internet mit mindestens einem weiteren Rechner verbindbar ist,
wobei der weitere Rechner zur Durchführung des Verfahrens verwendbar ist, insbesondere auch zur Auftragsauflösung und /oder Verbindung mit der Fertigung.

27. Datenträger mit einem darauf gespeicherten Datenverarbeitungsprogramm, das, wenn es auf einer Datenverarbeitungsanlage läuft, ein Verfahren nach einem der Ansprüche 1 bis 26 realisiert.

**Claims**

1. A method of determining and/or producing a drive or parts for a drive from a series of drives, wherein the series comprises at least one structural size, wherein each structural size comprises at least one variant of drives, **characterized in that**
a value of a variable is determined from entered and/or transmitted application data and/or data of a load collective, in particular a load collective comprising a plurality of partial collectives, for each variant of the series for the quantitative detection of the overload capacity,
and only variants are determined and/or produced in which the value of the variable meets a condition, in particular exceeds a critical value or is extremal,
wherein an operational reliability factor $S_B$ is provided as a variable.

2. A method according to one of the preceding Claims [*sic*], **characterized in that** only variants are determined and/or produced, of which the operational reliability factor $S_B$ exceeds the value 1 as a condition.

3. A method according to one of the preceding Claims, **characterized in that** only that variant is determined and/or produced which is the optimum drive and/or the most inexpensive drive for the application, in particular in accordance with further requirements such as also for example geometrical requirements, or the drive with the longest service life if the operational reliability factor $S_B$ is greater than 1 for more than one drive.

4. A method according to any one of the preceding Claims, **characterized in that** the operational reliability factor $S_B$ is determined in a drive provided for a load and comprising a gear mechanism and a motor, wherein an operational reliability factor $S_B$ for the drive or at least for the gear mechanism thereof is determined from an at least three-dimensional load collective[1].
[1] *N.B.* As it stands, the clause has a pronoun and a noun as candidates for the subject; the noun is in the genitive but is preceded by an article in the nominative. In the translation the noun has been assumed to be the subject and the pronoun to be otiose.

5. A method according to any one of the preceding Claims, **characterized in that** at least in the case of the gear mechanism an individual operational reliability factor $S_{Bj}$ is determined for each component **j,** and the minimum of all the individual operational reliability factors $S_{Bj}$ is used or determined from it as an operational reliability factor $S_B$ and is displayed and/or indicated and [for further use] for initiating a task and for connecting to production[1].
[1]*N.B.* The words "for further use" have been added on the basis of the corresponding paragraph 2 on page 3 of the English translation.

6. A method according to any one of the preceding Claims, **characterized in that** the load collective is at least four-dimensional and contains information on the time pattern of the variables of torque, rotational speed, axial force and transverse force.

7. A method according to any one of the preceding Claims, **characterized in that** the load collective contains the direction and magnitude of the transverse force and/or the application points of the transverse force.

8. A method according to any one of the preceding Claims, **characterized in that** the load collective contains load-change figures for the variables as information on the time pattern.

9. A method according to any one of the preceding Claims, **characterized in that** the load collective contains partial collectives which are created by grouping into classes, wherein the respective classes contain respective value ranges of associated variables.

10. A method according to any one of the preceding Claims, **characterized in that** a limit-load characteristic is determined for a respective partial collective for each component, and a permissible torque is determined by means of the said limit-load characteristic and at least one pre-settable variable, such as transverse force and/or axial force.

11. A method according to any one of the preceding Claims, **characterized in that** portions of shafts having different diameters or portions of shafts which have geometrical discontinuities are taken into consideration as separate components.

12. A method according to any one of the preceding Claims, **characterized in that** the limit-load characteristic is capable of being parameterized by two parameters in a transverse-force / torque diagram, and/or the limit-load characteristic is capable of being parameterized by four or five parameters in a transverse-force / axial-force diagram.

13. A method according to any one of the preceding Claims, **characterized in that** a value for permissible equivalent torque is determined from a value for transverse force by means of a limit-load characteristic in a transverse-force / torque diagram.

14. A method according to any one of the preceding Claims, **characterized in that** a value for permissible equivalent torque is determined from a value for axial force by means of a limit-load characteristic in an axial-force / torque diagram.

15. A method according to any one of the preceding Claims, **characterized in that** a value for permissible equivalent torque is determined from a value for axial force and a value for transverse force by means of a limit-load characteristic in an axial-force / transverse-force diagram.

16. A method according to any one of the preceding Claims, **characterized in that** a breaking-load cycle number is determined for each partial collective and for each component from the associated pre-set load-change number, the value for torque and the respective permissible equivalent torque.

17. A method according to any one of the preceding Claims, **characterized in that** at least one damage-accumulation hypothesis is used for determining the operational reliability factor $S_B$.

18. A method according to any one of the preceding Claims, **characterized in that** an individual operational reliability factor $$S_{Bj} = \frac{1}{\sum_i \frac{n_j}{N_i}}$$ is determined from the respective breaking-load cycle numbers and the associated load-change number, in particular in accordance with a damage-accumulation hypothesis.

19. A method according to any one of the preceding Claims, **characterized in that** the temperature of the surroundings, the maximum operating temperature and/or the desired minimum service life of the drive is or are contained in the application data entered, in particular containing geometrical marginal conditions.

20. A method according to any one of the preceding Claims, **characterized in that** the thermal loading capacity of the motor and/or the gear mechanism, is displayed and/or indicated, in particular as a thermal limit output.

21. A method according to any one of the preceding Claims, **characterized in that** data are entered and displayed by way of an interface, wherein the interface comprises a graphic user interface and/or a data interface for the input and output of data, wherein application data are capable of being entered which comprise a load collective comprising a plurality of partial collectives, wherein at least data, such as values or time patterns, relating to the three variables are capable of being entered at each partial collective.

22. A method according to any one of the preceding Claims, **characterized in that** the load collective [is ...][1]

   - by a tuple associated with the respective partial collective, comprising in each case the load-change number, the torque and at least one further variable, and/or
   - by at least one travel diagram which represents at least two different states of the application, wherein the load-change number, the torque and at least one further variable are capable of being entered in each state.
   [1]N.B. The verb, presumably in the passive, appears to be absent in this clause.

23. A method according to any one of the preceding Claims, **characterized in that** travel diagrams are capable of being entered graphically by way of the interface, in particular with the use of a mouse.

24. A method according to any one of the preceding Claims, **characterized in that** during the input the user is guided in such a way that after entering information on the non-presence of an axial force and/or transverse force he or she is caused to enter only the torque and the load-change number, and after the input of information on the presence of an axial of force and/or transverse force he or she is caused to enter information on the variables axial force, transverse force, torque and load-change number, and in particular information on the time pattern of all the variables.

25. A method according to any one of the preceding Claims, **characterized in that**

- in the case of a drive of an installed application, information on operational values of the variables is detected during operation, in particular whilst using sensors for this purpose,
- and the said values are used as application data or data of the load collective,
- and the optimum drive and/or the most inexpensive drive is determined therefrom and is compared with the one present in the application.

26. A method according to any one of the preceding Claims, **characterized in that** the data input is carried out on a first computer which is capable of being connected by way of the Internet to at least one further computer, wherein the further computer is capable of being used to perform the method, and in particular also for starting a task and/or for connecting to production.

27. A data carrier with a data-processing program which is stored in it and which, when it runs on a data-processing unit, performs a method according to any one of Claims 1 to 26.

**Revendications**

1. Procédé pour la détermination et/ou la fabrication d'un entraînement ou de pièces pour un entraînement provenant d'une gamme d'entraînements,
la gamme comprenant au moins une taille, chaque taille comprenant au moins une variante d'entraînements,
**caractérisé en ce que**
à partir de données d'application entrées et/ou transmises et/ou de données d'un collectif de charges, en particulier d'un collectif de charges comprenant plusieurs collectifs partiels, une valeur d'une grandeur pour la saisie quantitative de la capacité de surcharge est déterminée pour chaque variante de la série,
et **en ce que** seules des variantes sont déterminées et/ou fabriquées, pour lesquelles la valeur de la grandeur remplit une condition, en particulier dépasse une valeur critique ou est un extremum,
dans lequel un facteur de sûreté de fonctionnement $S_B$ est prévu comme grandeur.

2. Procédé selon l'une quelconque des revendications précédentes,
**caractérisé en ce que**
seules des variantes dont, comme condition, le facteur de sûreté de fonctionnement $S_B$ dépasse la valeur 1 sont déterminées et/ou fabriquées.

3. Procédé selon l'une quelconque des revendications précédentes,
**caractérisé en ce que**
seule celle des variantes est déterminée et/ou fabriquée qui est l'entraînement optimal et/ou de coût le plus avantageux pour l'application, en particulier selon d'autres exigences comme aussi par exemple des exigences géométriques ou, si le facteur de sûreté de fonctionnement $S_B$ est supérieur à 1 pour plus d'un entraînement, qui est l'entraînement avec la longévité la plus longue.

4. Procédé selon l'une quelconque des revendications précédentes,
**caractérisé en ce que**
le facteur de sûreté de fonctionnement $S_B$ est déterminé pour un entraînement, comprenant la boîte de vitesses et le moteur, prévu pour une charge,
un facteur de sûreté de fonctionnement $S_B$ pour l'entraînement ou au moins pour sa boîte de vitesses étant déterminé depuis un collectif de charge au moins tridimensionnel.

5. Procédé selon l'une quelconque des revendications précédentes,
**caractérisé en ce que**
au moins sur la boîte de vitesses, un facteur de sûreté de fonctionnement individuel $S_{Bj}$ est déterminé pour chaque composant j, et de celui-ci le minimum de tous les facteurs de sûreté de fonctionnement individuels $S_{Bj}$ est utilisé ou déterminé et sorti et/ou affiché comme facteur de sûreté de fonctionnement $S_B$, et pour le déclenchement de la commande et pour la liaison avec la fabrication.

**6.** Procédé selon l'une quelconque des revendications précédentes,
**caractérisé en ce que**
le collectif de charge est au moins quadridimensionnel et comprend au moins des informations sur la variation en fonction du temps des grandeurs couple, vitesse de rotation, force axiale et force transversale.

**7.** Procédé selon l'une quelconque des revendications précédentes,
**caractérisé en ce que**
le collectif de charge comporte la direction et le module de la force transversale
et/ou le point d'attaque de la force transversale.

**8.** Procédé selon l'une quelconque des revendications précédentes,
**caractérisé en ce que**
le collectif de charge comprend comme informations sur la variation en fonction du temps le nombre d'alternances de charge pour les grandeurs.

**9.** Procédé selon l'une quelconque des revendications précédentes,
**caractérisé en ce que**
le collectif de charge comprend des collectifs partiels qui sont engendrés par formation de classes, les classes respectives comprenant des intervalles de valeur respectifs des grandeurs correspondantes.

**10.** Procédé selon l'une quelconque des revendications précédentes,
**caractérisé en ce que**
pour un collectif partiel respectif, une ligne caractéristique de charge limite est déterminée pour chaque composant et **en ce qu'**au moyen de cette ligne caractéristique de charge limite et d'au moins une grandeur spécifiable, comme la force transversale et/ou la force axiale, un couple admissible est déterminé.

**11.** Procédé selon l'une quelconque des revendications précédentes,
**caractérisé en ce que**
des tronçons d'arbres présentant différents diamètres ou des tronçons d'arbres présentant des discontinuités géométriques sont retenus comme composants séparés.

**12.** Procédé selon l'une quelconque des revendications précédentes,
**caractérisé en ce que**
la courbe caractéristique de charge limite est paramétrable par deux paramètres dans un diagramme force transversale-couple
et/ou
la courbe caractéristique de charge limite est paramétrable par quatre ou cinq paramètres dans un diagramme force transversale-force axiale.

**13.** Procédé selon l'une quelconque des revendications précédentes,
**caractérisé en ce que**
au moyen d'une courbe caractéristique de charge limite dans un diagramme force transversale-couple, une valeur pour le couple admissible équivalent est déterminée à partir d'une valeur pour la force transversale.

**14.** Procédé selon l'une quelconque des revendications précédentes,
**caractérisé en ce que**
au moyen d'une courbe caractéristique de charge limite dans un diagramme force axiale-couple, une valeur pour le couple admissible équivalent est déterminée à partir d'une valeur pour la force axiale.

**15.** Procédé selon l'une quelconque des revendications précédentes,
**caractérisé en ce que**
au moyen d'une courbe caractéristique de charge limite dans un diagramme force axiale-force transversale, une valeur pour le couple admissible équivalent est déterminée à partir d'une valeur pour la force axiale et d'une valeur pour la force transversale.

**16.** Procédé selon l'une quelconque des revendications précédentes,
**caractérisé en ce que**
pour chaque collectif partiel et pour chaque composant, un nombre d'alternances de charge de rupture est déterminée à partir du nombre correspondant prédéfini des alternances de charge, de la valeur pour le couple et du couple admissible équivalent respectif.

17. Procédé selon l'une quelconque des revendications précédentes,
**caractérisé en ce que**
pour la détermination du facteur de sûreté de fonctionnement $S_B$, on utilise au moins une hypothèse d'accumulation de dommage.

18. Procédé selon l'une quelconque des revendications précédentes,
**caractérisé en ce que**
à partir de la fréquence de cycles de rupture respective et du nombre d'alternances de charge correspondant, un facteur individuel de sûreté de fonctionnement $S_{Bj} = \dfrac{1}{\sum\limits_i \dfrac{n_i}{N_i}}$ est déterminé, en particulier selon une hypothèse d'accumulation de dommage.

19. Procédé selon l'une quelconque des revendications précédentes,
**caractérisé en ce que**
la température de l'environnement, la température de service maximale et/ou la longévité minimale désirée de l'entraînement sont appréhendées par les données d'application entrées, en particulier comportant les conditions géométriques aux limites.

20. Procédé selon l'une quelconque des revendications précédentes,
**caractérisé en ce que**
la capacité de charge thermique du moteur et/ou de la boîte de vitesses est sortie et/ou est affichée, en particulier comme puissance thermique limite.

21. Procédé selon l'une quelconque des revendications précédentes,
**caractérisé en ce que**
des données sont entrées et sorties via une interface,
l'interface comprenant une interface utilisateur graphique et/ou une interface de données pour l'entrée et la sortie de données, des données d'application pouvant être entrées,
qui comprennent un collectif de charge comprenant plusieurs collectifs partiels,
au moins des données comme des valeurs ou des variations en fonction du temps pouvant être entrées pour les trois grandeurs à chaque collectif partiel.

22. Procédé selon l'une quelconque des revendications précédentes,
**caractérisé en ce que**
le collectif de charge peut être entré

- par un « Tupel » appartenant au collectif de charge, comprenant respectivement le nombre d'alternances de charge, le couple et au moins une autre grandeur, et/ou
- par au moins un diagramme de marche qui représente au moins deux états différents de l'application, le nombre d'alternances, le couple et au moins une autre grandeur pouvant être entrées pour chaque état.

23. Procédé selon l'une quelconque des revendications précédentes,
**caractérisé en ce que**
des diagrammes de marche peuvent être entrés graphiquement par l'interface, en particulier moyennant l'utilisation d'une souris.

24. Procédé selon l'une quelconque des revendications précédentes,
**caractérisé en ce que**
l'utilisateur est guidé lors de l'entrée de telle sorte qu'après l'entrée d'une information sur la non-existence d'une force axiale et/ou d'une force transversale, il n'est invité qu'à entrer un couple et un nombre d'alternance de charges. et qu'après l'entrée d'une information sur la présence d'une force axiale et/ou d'une force transversale, il est invité à entrer des informations sur les grandeurs force axiale, force transversale, couple et nombre d'alternances de charges, en particulier des informations sur la variation de toutes les grandeurs en fonction du temps.

**25.** Procédé selon l'une quelconque des revendications précédentes,
**caractérisé en ce que**

- sur un entraînement d'une application installée, des informations sur les valeurs concernant le service sont saisies en service, en particulier moyennant l'utilisation de capteurs à cet effet,
- et **en ce que** ces valeurs sont utilisées comme données d'application ou comme données du collectif de charge
- et **en ce que** l'entraînement optimal et/ou celui avec les coûts les plus avantageux en est déterminé et est comparé à celui présent dans l'application.

**26.** Procédé selon l'une quelconque des revendications précédentes,
**caractérisé en ce que**
l'entrée des données est exécutée sur un premier ordinateur qui peut être relié par Internet à au moins un autre ordinateur,
l'autre ordinateur étant utilisable pour l'exécution du procédé, en particulier aussi pour le déclenchement de la commande et/ou pour la communication avec la fabrication.

**27.** Support de données avec un programme de traitement des données qui, quand il tourne sur une installation de traitement des données, réalise un procédé selon l'une quelconque des revendications 1 à 26.

ProDrive V 2.04 [ / / ] - [Fahrantrieb]

Datei  Programme  Daten  Nebenrechnung  Tools  Schnittstellen  ?

## Fahrantrieb

minimale Masse [100] kg

maximale Masse [1000] kg

**Leistung**

○ statische Leistung [0] kW

○ Fahrwiderstand [0] N/t

◉ Laufraddurchmesser [315] mm

Zapfendurchmesser [60] mm

Hebelarm der Rollreibung [0.5] mm

Spurkranzbeiwert [0.003]

Lagerbeiwert [0.005]

**Vorgelege**

Art des Vorgeleges [1]

Ketten-, Zahnraddurchmesser [215] mm

Vorgelegeübersetzung [1]

maximale Geschwindigkeit [0.5] m/s

(Mindest-) Beschleunigung [0.3] m/s²

(Mindest-) Verzögerung [0.3] m/s²

**Zusatzbelastung**

zusätzliche Leistung [0] kW

zusätzliche Kraft [0] N

zusätzliches MTM (Last) [0] kgm²

zusätzliches MTM (Motor) [0] kgm²

Steigung [10] °

Lastwirkungsgrad [90] %

**Abtriebsdrehzahl berechnet nach**

◉ Laufraddurchmesser

○ Kettenraddurchmesser [215] mm

Anzahl der Antriebe [1]    Motorart [D ▾]

Rab.: 0 %

Fig.1

## Geschwindigkeits-Zeit-Fahrdiagramm

### Lastkollektiv

| t [s] | v[m/s] | $F_q$[N] | $F_a$[N] |
|---|---|---|---|
| 0 | 0 | 300 | 200 |
| ... | ... | ... | ... |
| ... | ... | ... | ... |
| ... | ... | ... | ... |

v

Cursor

t

Fig. 2

Fig. 3

Fig. 4

EP 1 436 675 B1

Fig. 5

23

$F_q$

$Q_1$

$F_{qzul}(M_a=0Nm)$

$Q_2$

$M_{azul}(F_q=0N)$

$M_a$

Fig. 6

Fig. 7

Fig. 8

Fig. 8b

Fig. 9

**EP 1 436 675 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1134637 A2